## Europäisches Patentamt

## European Patent Office

## Office européen des brevets

(19)

(11) **EP 0 933 903 B1**

(12) **EUROPEAN PATENT SPECIFICATION**

(45) Date of publication and mention
of the grant of the patent:
**29.12.2004 Bulletin 2004/53**

(51) Int Cl.$^7$: **H04L 27/26**

(21) Application number: **99300701.2**

(22) Date of filing: **29.01.1999**

(54) **Suppression of phase noise in multicarrier reception**

Unterdrückung von Phasenrauschen bei Mehrträgerempfang

Suppression du bruit de phase en réception multiporteur

(84) Designated Contracting States:
**DE FR GB**

(30) Priority: **30.01.1998 JP 1989198**

(43) Date of publication of application:
**04.08.1999 Bulletin 1999/31**

(73) Proprietor: **Kabushiki Kaisha Toshiba
Tokyo (JP)**

(72) Inventors:
• **Seki, Takashi
Yokohama-shi (JP)**
• **Taga, Noboru
Yokohama-shi (JP)**
• **Sato, Makoto
Yokohama-shi (JP)**

(74) Representative: **Boydell, John Christopher
Stevens, Hewlett & Perkins
Halton House
20/23 Holborn
London EC1N 2JD (GB)**

(56) References cited:
**EP-A- 0 683 576     EP-A- 0 730 357
EP-A- 0 734 132     EP-A- 0 772 332
US-A- 4 604 583**

• **SEKI T ET AL: "A Novel Phase Noise
Suppression Technique In Ofdm Receiver" ,
IEEE XP010283004 * the whole document ***
• **SEKI T ET AL: "NEW FREQUENCY
SYNCHRONIZATION TECHNIQUE FOR OFDM
DEMODULATION USING GUARD INTERVALS" ,
EIZO JOHO MEDIA GAKKAI GIJUTSU HOKOKU
- ITE TECHNICAL REPORT, EIZO JOHO MEDIA
GAKKAI, TOKYO, JP, VOL. 19, NR. 38, PAGE(S)
13-18 XP000934258 ISSN: 1342-6893 * abstract *
* figures 1-5 ***
• **NOGAMI H ET AL: "A FREQUENCY AND TIMING
PERIOD ACQUISITION TECHNIQUE FOR OFDM
SYSTEMS" , IEICE TRANSACTIONS ON
COMMUNICATIONS, INSTITUTE OF
ELECTRONICS INFORMATION AND COMM.
ENG. TOKYO, JP, VOL. E79-B, NR. 8, PAGE(S)
1135-1146 XP000628654 ISSN: 0916-8516
Section 1 Section 2 Section 3**

EP 0 933 903 B1

## Description

The present invention relates to an orthogonal frequency division multiplexing (referred to as OFDM hereinafter) signal receiving apparatus for receiving an OFDM signal a one-symbol interval of which is constituted of a guard interval and an effective symbol interval and, more particularly, to a technique of suppressing a phase noise in a received signal.

A digital modulation system has recently been developed widely for transmission of voice and video signals. Especially an OFDM modulation system which overcomes a multipath interference becomes a focus of attention in a terrestrial digital broadcast. Prior art of the present invention will now be described.

An OFDM signal is susceptible to a phase noise since it is generated by multiplexing the frequencies of a number of subcarriers. A consumer-oriented receiver therefore has a serious problem of degrading a bit error rate due to a phase noise of a local oscillator of a tuner.

There are two influences of phase noise upon an OFDM signal. One is a phase variation of subcarriers generated by low-frequency components of the phase noise. This is called a common phase error (CPE) since all the subcarriers are varied at the same angle. The other is an inter-carrier interference (ICI) in which the SNR of carriers is degraded due to an interference of phase noise of other subcarriers. These influences greatly depend upon a spectrum of phase noise and an interval between subcarriers.

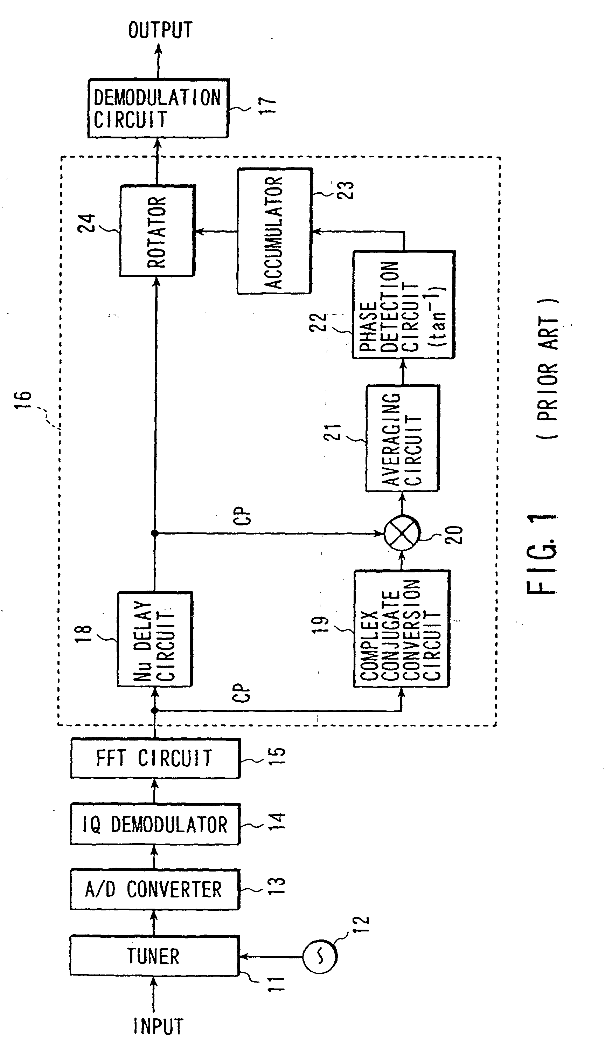

As a method of preventing the above characteristics from being degraded, J.H. Stott, "The DVB Terrestrial (DVB-T) Specification and Its Implementation in A Practical Modem," IBC, Sept., 1996 describes a method of eliminating a CPE using a continual pilot (CP) defined by DVB-T. FIG. 1 illustrates the constitution of a prior art OFDM signal receiving apparatus which is based on the contents of the technical literature.

Referring to FIG. 1, an input signal is frequency-converted to a signal having an IF (intermediate frequency) by a tuner 11 and a local oscillator 12. This signal is converted to a digital signal by an A/D converter 13 and then to a complex base-band signal by an IQ demodulator 14. A signal output from the IQ demodulator 14 is supplied to an FFT (Fast Fourier transform) circuit 15. The FFT circuit 15 removes an effective symbol interval (the number of samples: Nu) from a one-symbol interval of the OFDM signal to execute FFT processing (conversion of the effective symbol interval from a signal of time region to that of frequency region), thereby obtaining received data of each subcarrier.

The above-described CPE and ICI are caused on the output of the FFT circuit 15 due to a phase noise of the local oscillator 12. A CPE elimination circuit 16 eliminates a CPE of each subcarrier. An output signal of the circuit 16 is sent to a demodulation circuit 17, and a QAM signal transmitted to each subcarrier is demodulated and output therefrom.

The configuration and operation of the CPE elimination circuit 16 will be described further.

A signal having a fixed amplitude and a fixed phase is transmitted to a plurality of subcarriers having a predetermined frequency under the DVB-T standard. This is a CP (continual pilot) signal. The CP signal is branched off from the received data output from the FFT circuit 15 and converted to one in complex conjugate form in a complex conjugate conversion circuit 19. The signal is then supplied to a complex multiplier 20. The complex multiplier 20 is supplied with a one-symbol-old CP signal through an Nu delay circuit 18. In other words, the complex multiplier 20 multiplies the current received data and one-symbol-old data of the CP signals having the same frequency (the CP signals have only the effective symbol since they have been subjected to the FFT processing) to detect a phase variation from the one-symbol-old CP signal.

An output of the complex multiplier 20 is transmitted to an averaging circuit 21. The circuit 21 averages detection results of a plurality of CP signals to eliminate noise components. The averaging circuit 21 supplies a complex signal to a phase detection ($\tan^{-1}$) circuit 22, and the circuit 22 detects a phase of the complex signal. This detected phase corresponds to a phase variation common to the subcarriers generated by phase noise, i.e., a CPE. An output of the phase detection circuit 22 is supplied to an accumulator 23 and the detected phases are accumulated therein. An output of the accumulator 23 is sent to a rotator 24 and a one-symbol-old signal is rotated reversely. The CPE can thus be eliminated from the output signal of the TFT circuit.

As described above, the OFDM signal receiving apparatus shown in FIG. 1 is capable of eliminating a CPE due to a phase noise. However, when the low-frequency components of spectrum of the phase noise are large, an ICI suddenly increases as a frequency interval between subcarriers becomes narrow like an OFDM signal of 8K carrier. Therefore, only the CPE elimination has little effect on the improvement of a bit error rate. These circumstances are caused by not only the phase noise of the tuner but also the Doppler effect caused when a movable unit receives a signal.

It is accordingly an object of the present invention to provide an OFDM signal receiving apparatus which resolves the above problem and suppresses an ICI as well as a CPE to prevent a bit error rate due to a phase noise from being degraded.

Reference is also made to a paper by Seki T. et al entitled "New Frequency Synchronization Technique for OFDM Demodulation using Guard Intervals", Eizo Joho Media Gakkai Gijutsu Hokoku - Ite Technical Report, Eizo Joho Media Gakkai, Tokyo, JP, Vol. 19, Nr. 38, Page(s) 13-18 ISSN: 1342-6893. In this paper is described an AFC (automatic frequency control) system which uses guard intervals contained within the OFDM signals. In the described system, signals which are the same as in effective symbol periods are transmitted in guard intervals, and frequency errors are detected by determining the correlation between the guard intervals and the effective symbol periods.

EP-A-0772332 describes a method and apparatus for extracting information from an OFDM signals. In the described method, an input signal Y is received and a signal X is provided which is delayed by a time period equal to the active symbol period. The complex product of signals X and Y* is formed to provide a succession of pulses, one for each symbol period. The complex product signal is then filtered using a filter having filter elements having a delay equal to the total symbol period.

According to the present invention, there is provided an OFDM signal receiving apparatus for receiving an OFDM (orthogonal frequency division multiplexing) signal a one-symbol interval of which is constituted of a guard interval (whose sample number is Ng) and an effective symbol interval (whose sample number is Nu), the OFDM signal being formed by copying a signal of a rear portion of the effective symbol to the guard interval, converting the OFDM signal into a complex base-band OFDM signal, and demodulating the complex base-band OFDM signal to obtain symbol data, characterised by comprising:

first carrier phase variation detection means for detecting a carrier phase variation $\Delta\theta(m)$ per Nu sample in the m-th received symbol, using a signal S(m,n) at the n-th sample point ($0 \leq n \leq$ Ng-1) within the guard interval of the m-th received symbol in the complex base-band OFDM signal and a signal S (m,n+Nu) at a sample point within the effective symbol interval which is delayed by Nu sample from the signal S (m, n);

carrier phase estimation means for estimating a carrier phase $\theta^{\wedge}(m+1,0)$ at the head of the (m+1)-th received symbol from the carrier phase variation $\Delta\theta(m)$ output from the first carrier phase variation detection means and a carrier phase $\theta^{\wedge}(m,0)$ at the head of the m-th received symbol, and estimating all carrier phases $\theta^{\wedge}(m,n)$ ($0 \leq n \leq$ Ng+Nu-1) within the m-th received symbol from carrier phases at the heads of at least m-th and (m+1)-th two continuous received symbols;

first phase variation correction means for correcting a phase variation in received signal by rotating signals S(m, n) ($0 \leq n \leq$ Ng+Nu-1), located at all sample points of the m-th received symbol, by $-\theta^{\wedge}(m,n)$ using a signal output from the carrier phase estimation means;

time-to-frequency region conversion means for converting an effective symbol interval within an output of the phase variation correction means from a signal of a time region to a signal of a frequency region to demodulate data of each subcarrier in the OFDM signal; and

demodulation means for demodulating an output of the time-to-frequency region conversion means to obtain symbol data transmitted to each subcarrier.

In an embodiment, the one-symbol interval of said OFDM signal contains at least a known phase modulation carrier in a known position, and said apparatus further comprises:

second phase variation detection means for detecting a phase variation $\Delta\phi(m)$ common to all subcarriers, based on time-to-frequency region converting results C (m,k) and C (m+1,k) of continuous two symbols, using the phase modulation carrier output from the time-to-frequency region conversion means; and

second phase variation correction means for rotating the time-to-frequency region converting result C (m,k) by $-\Delta\phi(m)$ using an output of the second carrier phase variation detection means to eliminate the phase variation common to all the subcarriers.

This summary of the invention does not necessarily describe all necessary features so that the invention may also be a sub-combination of these described features.

The invention can be more fully understood from the following detailed description when taken in conjunction with the accompanying drawings, in which:

Figure 1 is a block diagram of an example of a prior art OFDM signal receiving apparatus;

Figure 2 is a block diagram of the constitution of an OFDM signal receiving apparatus according to a first embodiment of the present invention;

FIG. 3 is a view depicting both a format of one symbol of a base-band OFDM signal input to a phase noise suppression circuit of the apparatus shown in FIG. 2 and contents processed by the phase noise suppression circuit;

FIG. 4 is a graph showing a relationship between variations in carrier phase and linear interpolation within an OFDM symbol in the phase noise suppression circuit;

FIG. 5 is a block diagram of a specific example of the configuration of a carrier phase estimation circuit used in the OFDM signal receiving apparatus of the first embodiment;

FIG. 6 is a block diagram of another specific example of the configuration of the carrier phase estimation circuit; and FIG. 7 is a block diagram of the constitution of an OFDM signal receiving apparatus according to a second embodiment of the present invention.

Embodiments of the present invention will now be described in detail with reference to the accompanying drawings.

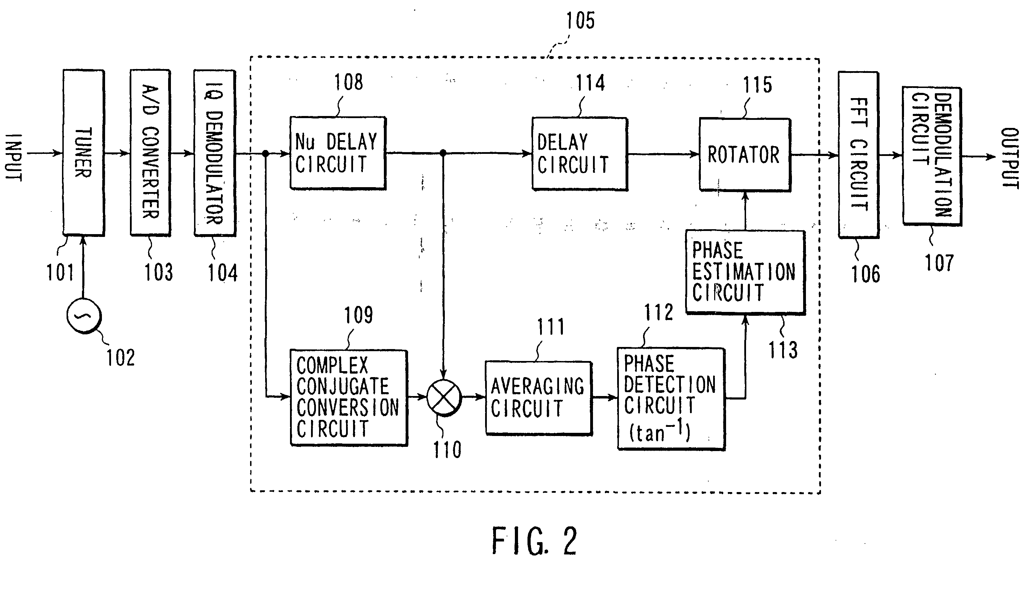

FIG. 2 illustrates an OFDM signal receiving apparatus according to a first embodiment of the present invention. As shown in FIG. 2, an input signal is frequency-converted to a signal having an IF (intermediate frequency) by a tuner 101 and a local oscillator 102. This signal is converted to a digital signal by an A/D converter 103 and then to a complex base-band signal by an IQ demodulator 104. A phase noise suppression circuit 105 detects a phase variation of an output signal of the IQ demodulator 104 and corrects it to suppress a phase noise of the local oscillator 102. An output signal of the circuit 105 is supplied to an FFT circuit 106.

The FFT circuit 106 removes an effective symbol interval (the number of samples: Nu) from a one-symbol interval of the OFDM signal to execute FFT processing, thereby obtaining received data of each subcarrier. Since the phase noise of the local oscillator 102 is reduced by the phase noise suppression circuit 105 before the FFT processing, both a CPE and an ICI are reduced from the output of the FFT circuit 106. The output of the FFT circuit 106 is sent to a demodulation circuit 107, and a QAM signal transmitted to each subcarrier is demodulated and output therefrom.

The configuration and operation of the phase noise suppression circuit 105 will be described further.

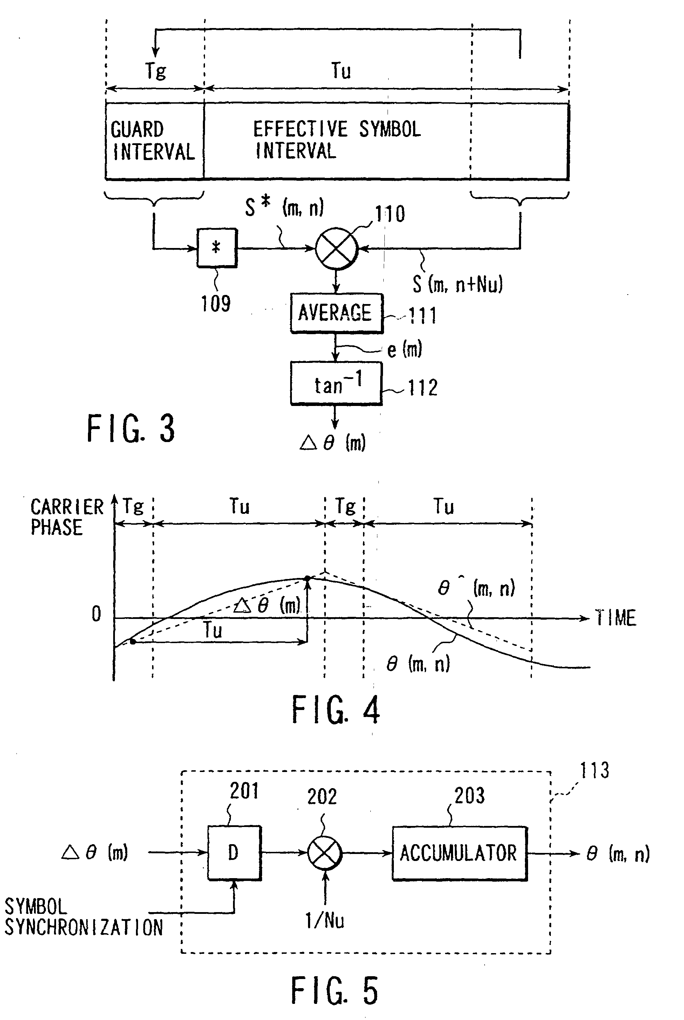

As illustrated in FIG. 3, one symbol of an OFDM signal is constituted of a guard interval (time interval Tg) and an effective symbol interval (time interval Tu). In the guard interval, part of an effective symbol is copied to prevent a multipath interference between symbols. A phase variation of carriers generated during the time interval Tu can thus be detected using these signals.

If a signal at the n-th ($0 \leq n \leq Ng-1$) sample point within the guard interval of the m-th received symbol in a complex base-band signal is expressed by $S(m,n)$, an error vector $e(m,n)$ indicative of carrier phase variation per time interval Tu can be obtained by the following equation:

$$e(m,n) = S^*(m,n) \cdot S(m,n+Nu) \quad (0 \leq n \leq Ng-1) \tag{1}$$

where Nu is the number of samples during the effective symbol interval, Ng is the number of samples during the guard interval, and $S^*(m,n)$ indicates a complex conjugate of $S(m,n)$. The operation of equation (1) is performed by an Nu delay circuit 108, a complex conjugate conversion circuit 109 and a complex multiplier 110.

Error vectors $e(m,n)$ of plural signals during the guard interval are averaged by the use of an averaging circuit 111 to eliminate an influence of noise from the signals. A result of the averaging is defined as error vector time $e(m)$ in the m-th received symbol. For example, when all the signals during the guard interval are averaged, the error vector time $e(m)$ is expressed by the following equation:

$$e(m) = \sum_{n=0}^{Ng-1} e(m,n) \qquad \cdots \ (2)$$

The phase component of the error vector time $e(m)$ obtained by the above equation (2) is defined as a carrier phase variation $\Delta\theta(m)$ per time interval Tu in the m-th received symbol. This carrier phase variation $\Delta\theta(m)$ is obtained from the following equation by means of a phase detection circuit ($\tan^{-1}$) 112:

$$\Delta\theta(m) = \tan^{-1}(Im[e(m)]/Re[e(m)]) \tag{3}$$

Using the above carrier phase variation $\Delta\theta(m)$, a carrier phase $\theta(m,n)$ within an OFDM symbol is estimated by a phase estimation circuit 113. A result of the estimation is $\theta^\wedge(m,n)$.

Using the output $\theta^\wedge(m,n)$ of the phase estimation circuit 113, a phase of output $S(m,n)$ of a delay circuit 114 for timing adjustment is corrected by a rotator 115. When a phase-corrected signal is represented as $S'(m,n)$, it is given by the following equation:

$$S'(m,n) = S(m,n) \cdot \exp[-j\theta^\wedge(m,n)] \tag{4}$$

A method of estimating a carrier phase within the OFDM symbol, will be described with reference to FIG. 4.

FIG. 4 shows a relationship between variations of the carrier phase within the OFDM symbol and linear interpolation which will be described below. Using the carrier phase variation $\Delta\theta(m)$ obtained by the above equation (3), a carrier phase estimated value $\theta^\wedge(m+1,0)$ at the head of the (m+1)-th received symbol is calculated by the following equation. A carrier phase estimated value $\theta^\wedge(m,0)$ at the head of the m-th received symbol is one obtained when the (m-1)-th received symbol was processed.

$$\theta^\wedge(m+1,0) = \theta^\wedge(m,0)+(Ns/Nu)\cdot\Delta\theta(m) \tag{5}$$

where Ns is the number of samples within a one-symbol interval.

All carrier phase estimated values $\theta^\wedge(m,n)$ within the m-th received symbol are obtained as follows by linear interpolation from both the carrier phase estimated values $\theta^\wedge(m,0)$ and $\theta^\wedge(m+1,0)$.

$$\theta^\wedge(m,n) = (1-n/Ns)\cdot\theta^\wedge(m,0)+(n/Ns)\cdot\theta^\wedge(m+1,0)$$

$$= \theta^\wedge(m,0)+(n/Nu)\cdot\Delta\theta(m) \tag{6}$$

FIG. 5 shows an example of the configuration of the phase estimation circuit 113 for estimating a carrier phase by the linear interpolation expressed by the equation (6). As shown in FIG. 5, a latch (D) circuit 201 is supplied with both a carrier phase variation $\Delta\theta(m)$ for every time interval Tu as input data and a symbol sync signal as a clock. The carrier phase variation $\Delta\theta(m)$ is thus latched in the latch circuit 201 with the timing of the head of the OFDM symbol. Since the carrier phase variation $\Delta\theta(m)$ is a value within the time interval Tu (the number of samples is Nu), it is multiplied by 1/Nu using a multiplier 202 to obtain a phase variation of one sample. Signals output from a multiplier 202 are accumulated in an accumulator 203 in units of sample. Consequently the all carrier phase estimated values $\theta^\wedge(m,n)$ within the symbol can be obtained by the linear interpolation using the equation (6).

An arbitrary value can be used as the initial value of the accumulator 203 when phase estimation is started (m = n = 0). The reason is as follows. A fixed offset, which is caused in a carrier phase estimated according to the initial value, can be corrected by a sync signal detection circuit constituting the demodulation circuit 107.

In the above equation (6), a carrier phase within a symbol is interpolated based on the carrier phase estimated values of the heads of continuous two symbols. If more phase data are used for interpolation, the carrier phase can be estimated with higher precision. For example, all the carrier phase estimated values $\theta^\wedge(m,n)$ within the m-th received symbol can be obtained from carrier phase estimated values $\theta^\wedge(m+1,0)$, $\theta^\wedge(m,0)$ and $\theta^\wedge(m-1,0)$ of heads of continuous three symbols, by the following equation:

$$\theta^\wedge(m,n) = A(n/Ns)\cdot\theta^\wedge(m+1,0)+B(n/Ns)\cdot\theta^\wedge(m,0)$$

$$+C(n/Ns)\cdot\theta^\wedge(m-1,0)(m) \tag{7}$$

In the above equation (7), A(n/Ns), B(n/Ns) and C(n/Ns) are polynomials for interpolation. Various processes such as Gauss interpolation are known as an interpolation algorithm.

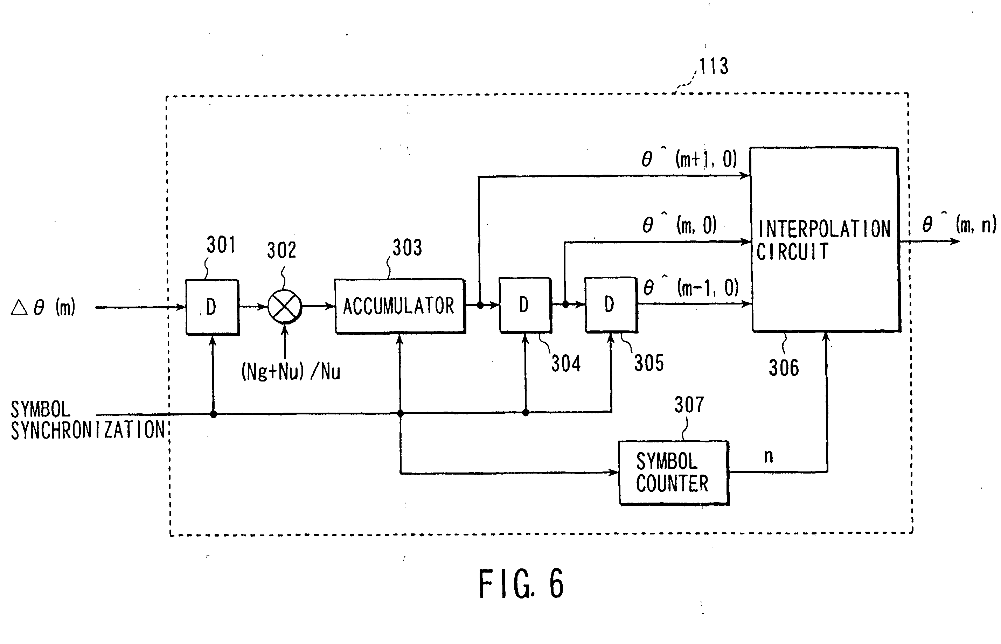

FIG. 6 shows another example of the configuration of the phase estimation circuit 113 for estimating a carrier phase by the interpolation given by the equation (7). Referring to FIG. 6, a latch circuit 301 is supplied with both a carrier phase variation $\Delta\theta(m)$ for every time interval Tu as input data and a symbol sync signal as a clock. The carrier phase variation $\Delta\theta(m)$ is thus latched in the latch circuit 301 with the timing of the head of the m-th OFDM symbol. Since the carrier phase variation $\Delta\theta(m)$ is a value within the time interval Tu (the number of samples is Nu), it is multiplied by (Ng+Nu)/Nu using a multiplier 302 to obtain a phase variation of one OFDM symbol.

Signals output from a multiplier 302 are accumulated in an accumulator 303 in units of symbol. In other words, the output of the accumulator 303 is a carrier phase estimated value $\theta^\wedge(m+1,0)$ at the head of the next symbol or the (m+1)-th symbol. The outputs of latch circuits 304 and 305 are a carrier phase estimated value $\theta^\wedge(m,0)$ at the head of the m-th received symbol and a carrier phase estimated value $\theta^\wedge(m-1,0)$ at the head of the (m-1)-th received symbol, respectively.

The output signals of the accumulator 303 and latch circuits 304 and 305 are supplied to an interpolation circuit 306, and a sample number n within a symbol is supplied from a symbol counter 307 to the interpolation circuit 306. The circuit 306 computes carrier phase estimated values θ^(m+1,0), θ^(m,0) and θ^(m-1,0) at the heads of (m+1)-th, m-th and (m-1)-th received symbols and does all carrier phase estimated values θ^(m,n) within the m-th symbol using the sample number n.

As described above, the phase estimation circuit shown in FIG. 6 is more complicated in signal processing and circuit arrangement than that shown in FIG. 5; however, the former circuit is capable of obtaining the carrier phase θ^(m,n) with higher precision.

In the circuit shown in FIG. 6, an arbitrary value can be used as the initial value of the accumulator 303 when phase estimation is started (m = 0). The reason is as follows. A fixed offset, which is caused in a carrier phase according to the initial value, can be corrected by a sync signal detection circuit constituting the demodulation circuit 107. Furthermore, in the circuit of FIG. 6, interpolation is made using three pieces of phase data, but it is evident that the interpolation can be done using more pieces of phase data.

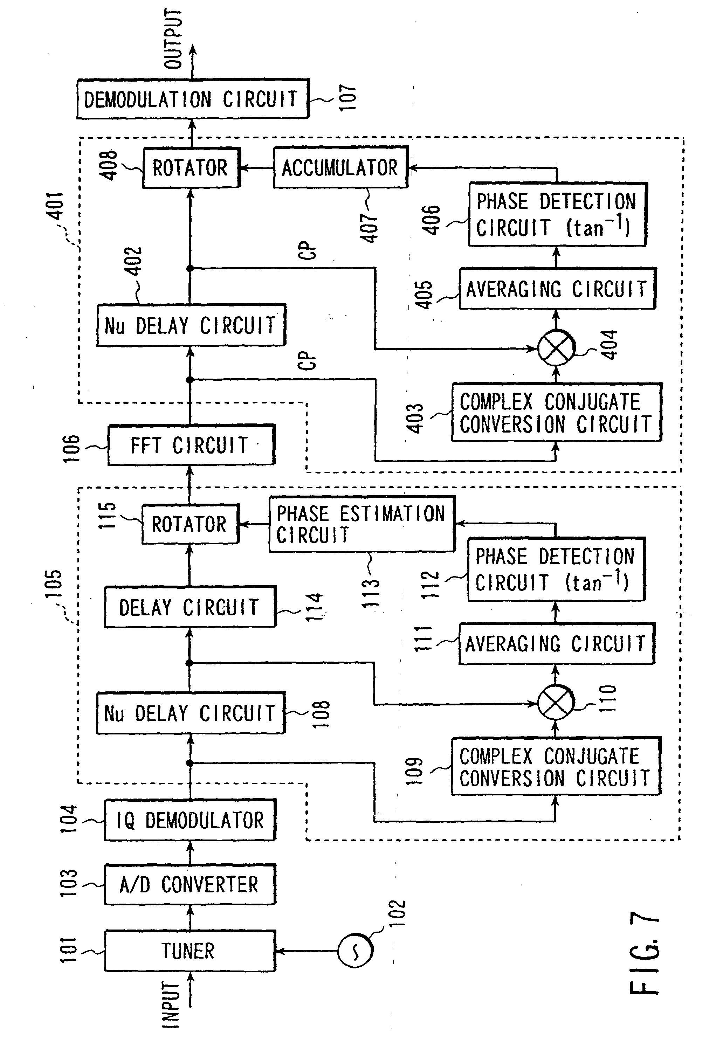

FIG. 7 illustrates an OFDM signal receiving apparatus according to a second embodiment of the present invention. In the second embodiment, a CPE elimination circuit 401 is added to the apparatus of FIG. 2 and it is provided after the FFT circuit 106, as in the case of the prior art apparatus. Both a CPE and an ICI are decreased by suppressing a phase noise by a phase noise suppression circuit 105 before the FFT circuit 106, and the remaining CPE is eliminated by a CPE elimination circuit 401. The CPE elimination circuit 401 has the same configuration as that of the circuit 16 illustrated in FIG. 1, and includes an Nu delay circuit 402, a complex conjugate conversion circuit 403, a complex multiplier 404, an averaging circuit 405, a phase detection circuit (tan$^{-1}$) 406, an accumulator 407 and a rotator 408. The operation thereof is the same as that of the circuit 16 shown in FIG. 1.

A CP signal is branched off from received data output from the FFT circuit 106 and converted to one in complex conjugate form in the complex conjugate conversion circuit 403. The signal is then supplied to the complex multiplier 404. The complex multiplier 404 is supplied with a one-symbol-old CP signal through the Nu delay circuit 402. The complex multiplier 404 multiplies the current received data and one-symbol-old data of the CP signals having the same frequency to detect a phase variation from the one-symbol-old CP signal.

An output of the complex multiplier 404 is supplied to the averaging circuit 405. The circuit 405 averages detection results of a plurality of CP signals to eliminate noise components. The averaging circuit 405 supplies a complex signal to the phase detection circuit 406, and the circuit 406 detects a phase of the complex signal. This detected phase corresponds to a phase variation common to the subcarriers generated by phase noise, i.e., a CPE. An output of the phase detection circuit 406 is supplied to the accumulator 407 and the detected phases are accumulated therein. An output of the accumulator 407 is sent to the rotator 408 and a one-symbol-old signal is rotated reversely. The CPE can thus be eliminated from the output signal of the TFT circuit 106.

With the above processing, the circuit of the second embodiment allows a degradation due to phase noise to be reduced more greatly than that of the first embodiment shown in FIG. 2.

In the above embodiments described above, a CP signal is contained in the symbol of an OFDM signal. The present invention is not limited to the CP signal. If there is a known phase modulation carrier (whose amplitude need not be fixed and which can be modulated) in a known position of the symbol, it can be used.

In the first and second embodiments shown in FIGS. 2 and 7, the QAM technique is used to modulate subcarriers. Even in a differential modulation technique such as DQPSK, the present invention can definitely be applied to such a configuration by replacing the sync signal detection circuit constituting the demodulation circuit 107 with a delay detection circuit.

As has been described above, according to the present invention, an OFDM signal receiving apparatus capable of reducing both a CPE and an ICI due to phase noise to prevent a bit error rate from being degraded, can be provided.

**Claims**

1. An OFDM signal receiving apparatus for receiving an orthogonal frequency division multiplexing OFDM signal a one-symbol interval of which is constituted of a guard interval whose sample number is Ng and an effective symbol interval whose sample number is Nu, the OFDM signal being formed by copying a signal of a rear portion of the effective symbol to the guard interval, converting the OFDM signal into a complex base-band OFDM signal, and demodulating the complex base-band OFDM signal to obtain symbol data, **characterised by** comprising:

   first carrier phase variation detection means (108, 109, 110, 111, 112) for detecting a carrier phase variation Δθ(m) per Nu sample in the m-th received symbol, using a signal S(m,n) at the n-th sample point, $0 \leq n \leq$ Ng-1, within the guard interval of the m-th received symbol in the complex base-band OFDM signal and a signal S (m,n+Nu) at a sample point within the effective symbol interval which is delayed by Nu sample from the signal S (m, n);

carrier phase estimation means (113) for estimating a carrier phase θ^(m+1,0) at the head of the (m+1)-th received symbol from the carrier phase variation Δθ(m) output from the first carrier phase variation detection means and a carrier phase θ^(m,0) at the head of the m-th received symbol, and estimating all carrier phases θ^(m,n), $0 \leq n \leq$ Ng+Nu-1, within the m-th received symbol from carrier phases at the heads of at least m-th and (m+1)-th two continuous received symbols;

first phase variation correction means (114, 115) for correcting a phase variation in received signal by rotating signals S(m,n), $0 \leq n \leq$ Ng+Nu-1, located at all sample points of the m-th received symbol, by - θ^ (m,n) using a signal output from the carrier phase estimation means;

time-to-frequency region conversion means (106) for converting an effective symbol interval within an output of the phase variation correction means from a signal of a time region to a signal of a frequency region to demodulate data of each subcarrier in the OFDM signal; and

demodulation means (107) for demodulating an output of the time-to-frequency region conversion means to obtain symbol data transmitted to each subcarrier.

2. An OFDM signal receiving apparatus according to claim 1 wherein the one-symbol interval of said OFDM signal contains at least a known phase modulation carrier in a known position, said apparatus further comprising:

second phase variation detection means (402, 403, 404, 405, 406, 407) for detecting a phase variation Δ ø (m) common to all subcarriers, based on time-to-frequency region converting results C (m,k) and C (m+1,k) of continuous two symbols, using the phase modulation carrier output from the time-to-frequency region conversion means; and

second phase variation correction means (408) for rotating the time-to-frequency region converting result C (m,k) by - Δ ø (m) using an output of the second carrier phase variation detection means to eliminate the phase variation common to all the subcarriers.

3. An OFDM signal receiving apparatus according to one of claims 1 and 2, **characterised in that** the first carrier phase variation detection means includes:

delay means (108) for delaying the complex base-band OFDM signal by Nu sample;

complex conjugate conversion means (109) for generating a complex conjugate signal of the complex base-band OFDM signal;

complex multiplying means (110) for multiplying an output of the delay means and an output of the complex conjugate conversion means;

averaging means (111) for averaging a plurality of samples of n, $0 \leqq n \leqq$ Ng-1, multiplication results within the guard interval of the m-th received symbol, which are output from the complex multiplying means, the number of the samples being not larger than Ng; and

phase detecting means (112) for detecting an output of the averaging means.

4. The OFDM signal receiving apparatus according to one of claims 1 and 2, **characterized in that** the carrier phase estimation means estimates all carrier phases θ(m,n) within the m-th received symbol from carrier phases θ^(m+1,0) and θ^(m,0) at the heads of continuous two symbols, and includes:

latch means (201) for latching the carrier phase variation Δϕ(m) with timing of the head of the symbol;

multiplying means (202) for multiplying an output of the latch means by a coefficient 1/Nu; and

accumulation means (203) for accumulating outputs of the multiplying means in units of sample.

5. The OFDM signal receiving apparatus according to one of claims 1 and 2, **characterized in that** the carrier phase estimation means estimates all carrier phases θ(m,n) within the m-th received symbol from carrier phases θ^(m+1,0), θ^(m,0), ..., θ^(m-1+2,0) at the heads of continuous l symbols, $l \geqq 3$, and includes:

first latch means (301) for latching the carrier phase variation Δϕ(m) with timing of the head of the symbol;

multiplying means (302) for multiplying an output of the first latch means by a coefficient (Ng+Nu)/Nu;

accumulation means (303) for accumulating outputs of the multiplying means with timing of the head of the symbol;

(l-1) second latch means (304, 305) for latching an output of the accumulation means within a (l-1) symbol interval;

a symbol counter (307) for generating a value n indicative of a sample position in the received symbol; and

interpolation means (306) for interpolating all carrier phases θ(m,n) within the m-th received symbol using an output θ^(m+1,0) of the accumulation means, outputs θ^(m,0), ..., θ^(m-1+2,0) of the (l-1) second latch means, and an output n̲ of the symbol counter.

## Patentansprüche

1. OFDM-Signalempfangsvorrichtung zum Empfang eines Orthogonalfrequenzteilungs-Multiplex-Signals (OFDM-Signal; Orthogonal Frequency Division Multiplexing Signal), wobei ein Ein-Symbol-Intervall aus einem Wach-Intervall, dessen Sample-Nummer = Ng ist, und aus einem effektiven Symbolintervall, dessen Sample-Nummer = Nu ist, aufgebaut ist, wobei das OFDM-Signal durch Kopieren eines Signals eines hinteren Abschnitts des effektiven Symbols zu dem Wach-Intervall, durch Umwandeln des OFDM-Signals in ein komplexes Basisband-OFDM-Signal und durch Demödulieren des komplexen Basisband-OFDM-Signals zum Erhalten von Symboldaten gebildet ist, **gekennzeichnet durch**:

   ein erstes Trägerphasenvariationsdetektionsmittel (108, 109, 110, 111, 112) zum Detektieren einer Trägerphasenvariation Δθ(m) pro Nu-Sample in dem m-ten empfangenen Symbol mit einem Signal S(m,n) an dem n-ten Sample-Punkt; mit $0 \leq n \leq Ng - 1$, innerhalb des Wach-Intervalls des m-ten empfangenen Symbols in dem komplexen Basisband-OFDM-Signal und mit einem Signal S(m,n+Nu) an einem Sample-Punkt innerhalb des effektiven Symbolintervalls, das um die Nu-Sample von dem Signal S(m,n) verzögert ist;
   ein Trägerphasenabschätzungsmittel (113) zum Abschätzen einer Trägerphase θ^(m+,0) an dem Kopf des (m+1)-ten empfangenen Symbols von der Trägerphasenvariation Δθ(m), die von dem ersten Trägerphasenvariationsdetektionsmittel ausgegeben wurde, und einer Trägerphase θ^(m,0) am Kopf des m-ten empfangenen Symbol, und Abschätzen aller Trägerphasen θ^(m,n), wobei $0 \leq n \leq Ng+Nu-1$ ist, innerhalb des m-ten empfangenen Symbols aus den Trägerphasen an den Köpfen zumindest der m-ten und (m +1)-ten zwei kontinuierlich empfangenen Symbole;
   ein erstes Phasenvariationskorrekturmittel (114,115) zur Korrektur einer Phasenvariation im empfangenen Signal **durch** Rotation der Signale S(m,n), wobei $0 \leq n \leq Ng+Nu-1$ ist, die an allen Sample-Punkten in dem m-ten empfangenen Symbol angeordnet sind, mit -θ^(m,n) wobei eine Signalausgabe von dem Trägerphasenabschätzungsmittel verwendet wird;
   ein Zeit-Frequenz-Regionswandlungsmittel (106) zum Umwandeln eines effektiven Symbolintervalls innerhalb einer Ausgabe des Phasenvariationskorrekturmittels von einem Signal in einem Zeitregion in ein Signal in einer Frequenzregion zum Demodulieren von Daten für jeden Unterträger in dem OFDM-Signal;
   ein Demodulationsmittel (107) zum Demodulieren einer Ausgabe des Zeit-Frequenz-Regionwandlermittels zum Erhalten von Symboldaten, die mit jedem Unterträger übertragen werden.

2. OFDM-Signalempfangsvorrichtung nach Anspruch 1, bei der das Ein-Symbol-Intervall des OFDM-Signals zumindest einen bekannten Modulationsträger an einer bekannten Position enthält, wobei die Vorrichtung des weiteren umfasst:

   ein zweites Phasenvariationsdetektionsmittel (402, 403, 405, 406, 407) zur Detektion einer Phasenvariation Δθ(m), die allen Unterträgern gemein ist, basierend auf den Zeit-Frequenz-Regionswandlungsergebnissen C (m,k) und C(m+1,k) von zwei aufeinander folgenden Symbolen, wobei die Phasenmodulationsträgerausgabe von dem Zeit-Frequenz-Regionswandlermittel verwendet wird;
   ein zweites Phasenvariationskorrekturmittel (408) zur Rotation des Zeit-Frequenz-Regionswandlungsresultats C(m,k) um -Δθ(m) wobei eine Ausgabe des zweiten Trägerphasenvariationsdetektionsmittels zum Eliminieren der Phasenvariation verwendet wird, die allen Unterträgern gemein ist.

3. OFDM-Signalempfangsvorrichtung nach einem der Ansprüche 1 und 2, **dadurch gekennzeichnet, dass** das erste Trägerphasenvariationsdetektionsmittel enthält:

   ein Verzögerungsmittel (108) zum Verzögern des komplexen Basisband-OFDM-Signals um Nu-Sample;
   ein Komplexkonjugiert-Wandlungsmittel (109) zum Erzeugen eines komplexkonjugierten Signals zu dem komplexen Basisband-OFDM-Signals;
   ein Komplexmultipliziermittel (110) zum Multiplizieren der Ausgabe des Verzögerungsmittels und der Ausgabe des Komplexkonjugiert-Wandlungsmittels;
   ein Mittelwert-Bildungsmittel (111) zum Bilden eines Mittelwerts einer Mehrzahl von Samplen von n Multiplikationsresultaten, wobei $0 \leq n \leq Ng-1$ ist, innerhalb des Wach-Intervalls des m-ten empfangenen Symbols, die von dem Komplexmultiplikationsmittel ausgegeben werden, wobei die Zahl der Sample nicht größer als Ng ist;

Phasendetektionsmittel (112) zum Detektieren der Ausgabe des Mittelwertbildungsmittels.

**4.** OFDM-Signalempfangsvorrichtung nach einem der Ansprüche 1 und 2, **dadurch gekennzeichnet, dass** das Trägerphasenbschätzungsmittel alle Trägerphasen $\Delta\theta$ (m,n) innerhalb des m-ten empfangenen Symbols aus den Trägerphasen $\theta^\wedge(m+1,0)$ und $\theta^\wedge(m,0)$ an den Köpfen aufeinanderfolgender zwei Symbole bestimmt, und die enthält;

ein Haltemittel (201) zum Halten der Trägerphasenvariation $\Delta\theta(m)$ mit Zeitsteuerung des Kopfes des Symbols;

ein Multiplikationsmittel (202) zum Multiplizieren einer Ausgabe des Haltemittels mit einem Koeffizienten 1/Nu; und

einem Akkumulationsmittel (203) zum Akkumulieren der Ausgaben des Multiplikationsmittels in Einheiten von Samplen.

**5.** OFDM-Signalempfangsvorrichtung nach einem der Ansprüche 1 und 2, **dadurch gekennzeichnet, dass** das Trägerphasenabschätzungsmittel alle Trägerphasen $\Delta\theta(m,n)$ innerhalb des m-ten Empfangssymbols aus den Trägerphasen $\theta^\wedge(m+1,0)$, $\theta^\wedge(m,0)$,..., $\theta^\wedge(m-l+2,0)$ an den Köpfen von aufeinanderfolgenden l Symbolen bestimmt, wobei l $\geq$ 3 ist, und die enthält:

ein erstes Haltemittel (301) zum Halten der Trägerphasenvariation $\Delta\theta(m)$ mit Zeitsteuerung des Kopfes des Symbols;

einem Multiplizierermittel (302) zum Multiplizieren einer Ausgabe des ersten Haltemittels mit einem Koeffizienten (Ng + Nu)/Nu;

ein Akkumulationsmittel (303) zum Akkumulieren der Ausgaben des Multiplikationsmittels mit der Zeitsteuerung des Kopfes des Symbols;

(l - 1) zweite Haltemittel (304, 305) zum Halten der Ausgabe des Akkumulationsmitteis innerhalb eines (l - 1) Symbolintervalls;

einen Symbolzähler (307) zum Erzeugen eines Wertes n, der eine Sämpleposition in dem empfangenen Symbols anzeigt;

ein Interpolationsmittel (306) zum Interpolieren aller Trägerphasen $\theta(m,n)$ innerhalb des m-ten empfangenen Symbols mit einer Ausgabe $\theta^\wedge(m+1,0)$ des Akkumulationsmittels, den Ausgaben $\theta^\wedge (m, 0)$,..., $\theta^\wedge(m-l+2,0)$ des l -1)-ten zweiten Haltemittels und einer Ausgabe n des Symbolzählers.

## Revendications

**1.** Appareil de réception de signal OFDM pour recevoir un signal de multiplexage de division de fréquence orthogonale OFDM dont un intervalle d'un symbole est constitué d'un intervalle de garde dont le numéro d'échantillon est Ng et un intervalle de symbole efficace dont le numéro d'échantillon est Nu, le signal OFDM étant formé en copiant un signal d'une partie arrière du symbole efficace jusqu'à un intervalle de garde, convertissant le signal OFDM en un signal OFDM de bande de base complexe, et pour démultiplexer le signal OFDM de bande de base complexe pour obtenir des données de symbole, **caractérisé en ce qu'**il comprend :

un premier moyen de détection de variation de phase de porteuse (108, 109, 110, 111, 112) pour détecter une variation de phase de porteuse $\Delta\theta(m)$ par échantillon Nu dans le $m^{ième}$ symbole reçu, en utilisant un signal S (m,n) ; au $n^{ième}$ point d'échantillonnage $0 \leq n \leq Ng-1$, dans l'intervalle de garde du $m^{ième}$ symbole reçu dans le signal OFDM de bande de base complexe et un signal S(m,n+Nu) en un point d'échantillon dans l'intervalle de symbole efficace qui est retardé par l'échantillon Nu du signal S(m,n) ;

un moyen d'estimation de phase de porteuse (113) pour estimer une phase de porteuse $\theta^\wedge(m+1,0)$ au début du $(m+1)^{ième}$ symbole reçu à partir de la variation de phase de porteuse $\Delta\theta(m)$ fournie par le premier moyen de détection de variation de phase de porteuse et une phase de porteuse $\theta^\wedge(m,0)$ au début du $m^{ième}$ symbole reçu, une estimation de toutes les phases $\theta^\wedge(m,n)$ $0 \leq n \leq Ng+Nu-1$, dans le $m^{ième}$ symbole reçu à partir des phases de porteuse aux débuts d'au moins des $m^{ième}$ et $(m+1)^{ième}$ de symboles reçus continus ;

des premiers moyens de correction de variation de phase (114, 115) pour corriger une variation de phase dans le signal reçu en tournant des signaux S(m,n), $0 \leq n \leq Ng+Nu-1$, situés à des points d'échantillonnage du $m^{ième}$ symbole reçu, de $\theta^\wedge(m,n)$ en utilisant un signal fourni par le moyen d'estimation de phase de porteuse ;

un moyen de conversion de domaine temporel - fréquentiel (106) pour convertir un intervalle de symbole dans une sortie du moyen de correction de variation de phase d'un signal du domaine temporel en un signal du domaine de fréquentiel pour démoduler les données de chaque sous-porteuse dans le signal OFDM ; et

un moyen de démodulation (107) pour démoduler une sortie du moyen de conversion de domaine temporel - fréquentiel pour obtenir des données de symbole transmises à chaque sous-porteuse.

2. Appareil de réception de signal OFDM selon la revendication 1 dans lequel l'intervalle d'un symbole dudit signal OFDM contient au moins une porteuse de modulation de phase connue dans une position connue, ledit appareil comprenant en outre :

un second moyen de détection de variation de phase (402, 403, 404, 405, 406, 407) pour détecter une variation de phase de $\Delta\phi(m)$ commune à toutes les sous-porteuses, sur la base du domaine temporel - fréquentiel convertissant des résultats C(m,k) et C(m+1,k) des deux symboles continus, en utilisant la porteuse de modulation de phase fournie par le moyen de conversion de domaine temporel - fréquentiel ; et

un second moyen de correction de variation de phase (408) pour effectuer la rotation du résultat de conversion de domaine temporel - fréquentiel C(m,k) de - $\Delta\phi(m)$ en utilisant une sortie du second moyen de détection de variation de phase de porteuse pour éliminer la variation de phase commune à toutes les sous-porteuse.

3. Appareil de réception de signal OFDM selon l'une des revendications 1 et 2, **caractérisé en ce que** le premier moyen de détection de variation de phase de porteuse comprend :

un moyen à retard (108) pour retarder le signal OFDM de bande de base complexe de l'échantillon Nu ;

un moyen de conversion de conjugué complexe (109) pour générer un signal de conjugué complexe du signal OFDM de bande de base complexe ;

un moyen de multiplication complexe (110) pour multiplier une sortie du moyen à retard et une sortie du moyen de conversion de conjugué complexe ;

un moyen de calcul de moyenne (111) pour calculer la moyenne d'une pluralité d'échantillons de n, $0 \leq n \leq$ Ng-1, de multiplication des résultats dans l'intervalle de garde du m$^{ième}$ symbole reçu, qui sont fournis par le moyen de multiplication complexe, le numéro d'échantillon n'étant pas plus grand que Ng ; et

un moyen de détection de phase (112) pour détecter une sortie du moyen de calcul de moyenne.

4. Appareil de réception de signal OFDM selon l'une quelconque des revendications 1 et 2, **caractérisé en ce que** le moyen d'estimation de phase de porteuse estime toutes les phases de porteuse $\theta(m,n)$ dans le m$^{ième}$ signal reçu à partir des phases de porteuse $\theta\hat{}(m+1,n)$ et $\theta\hat{}(m,0)$ aux débuts des deux symboles continus, et comprend :

un moyen de verrouillage (201) pour verrouiller la variation de phase de porteuse $\Delta\phi(m)$ avec la temporisation de la tête de symbole ;

un moyen de multiplication (202) pour multiplier une sortie du moyen de verrouillage par un coefficient 1/Nu ; et

un moyen d'accumulation (203) pour accumuler des sorties du moyen de multiplication dans des unités d'échantillon.

5. Appareil de réception de signal OFDM selon l'une des revendications 1 et 2, **caractérisé en ce que** le moyen d'estimation de phase de porteuse estime toutes les phases de porteuse $\theta(m,n)$ dans le m$^{ième}$ symbole reçu à partir de phase de porteuse $\theta\hat{}(m+1,0)$, $\theta\hat{}(m,0)$,..., $\theta\hat{}(m-1+2,0)$ au début des l symboles continus $1 \geq 3$, et comprend :

un premier moyen (301) pour verrouiller la variation de phase de porteuse $\Delta\phi(m)$ avec une temporisation de début de symbole ;

un moyen de multiplication (302) pour multiplier une sortie du premier moyen de verrouillage par un coefficient (Ng+Nu)/Nu ;

un moyen d'accumulation (303) pour accumuler des sorties du moyen de multiplication avec des temporisations du début de symbole ;

(l-1) seconds moyens de verrouillage (304, 305) pour verrouiller une sortie du moyen d'accumulation dans un (l-1) intervalle de symbole ;

un compteur de symbole (307) pour générer une valeur n indicatrice d'une position d'échantillon dans le symbole reçu ; et

un moyen d'interpolation (306) pour interpoler toutes les phases de porteuse $\theta(m,n)$, dans le m$^{ième}$ symbole reçu en utilisant une sortie $\theta\hat{}(m+1,0)$ du moyen d'accumulation, des sorties $\theta\hat{}(m,0)$,..., $\theta\hat{}(m-1+2,0)$ des (l-1) seconds moyens de verrouillage, et une sortie n du compteur de symbole.

FIG. 1 ( PRIOR ART )

FIG. 2

| Tg | Tu |
|---|---|
| GUARD INTERVAL | EFFECTIVE SYMBOL INTERVAL |

$S^*(m, n)$   110

109   *   ⊗   $S(m, n+Nu)$

AVERAGE   111

$e(m)$

$\tan^{-1}$   112

$\triangle \theta(m)$

## FIG. 3

CARRIER PHASE

| Tg | Tu | Tg | Tu |

0   $\triangle \theta(m)$   Tu   $\hat{\theta}(m, n)$   TIME

$\theta(m, n)$

## FIG. 4

113

201   202   203

$\triangle \theta(m)$ → D → ⊗ → ACCUMULATOR → $\theta(m, n)$

SYMBOL SYNCHRONIZATION

1/Nu

## FIG. 5

14

FIG. 6

FIG. 7

INPUT → 101 TUNER → 103 A/D CONVERTER → 104 IQ DEMODULATOR → [105] 108 Nu DELAY CIRCUIT → 114 DELAY CIRCUIT → 115 ROTATOR → 106 FFT CIRCUIT → [401] 402 Nu DELAY CIRCUIT → 408 ROTATOR → 107 DEMODULATION CIRCUIT → OUTPUT

102

113 PHASE ESTIMATION CIRCUIT

109 COMPLEX CONJUGATE CONVERSION CIRCUIT → 110 ⊗ → 111 AVERAGING CIRCUIT → 112 PHASE DETECTION CIRCUIT ($\tan^{-1}$)

CP   CP

403 COMPLEX CONJUGATE CONVERSION CIRCUIT → 404 ⊗ → 405 AVERAGING CIRCUIT → 406 PHASE DETECTION CIRCUIT ($\tan^{-1}$) → 407 ACCUMULATOR

EP 0 933 903 B1

16